# EUROPEAN PATENT APPLICATION

(11) **EP 1 291 833 A2**
(43) Date of publication of application: **12.03.2003**
(21) Application number: 02256150.0
(22) Date of filing: 04.09.2002
(51) Int. Cl.: G09F 9/00

(54) **Display system with cooling device**

(30) Priority: 06.09.2001 JP 2001269997
(71) Applicant: NGK INSULATORS, LTD., Nagoya-City, Aichi Prefecture 467-8530 (JP)
(72) Inventor: Takeuchi, Yukihisa, c/o NGK Insulators Ltd., Nagoya-shi, Aichi-ken, 467-8530 (JP); Nanataki, Tsutomu, c/o NGK Insulators Ltd, Nagoya-shi, Aichi-ken, 467-8530 (JP); Ohwada, Iwao, c/o NGK Insulators Ltd, Nagoya-shi, Aichi-ken, 467-8530 (JP); Shikata, Isao, c/o NGK Insulators Ltd, Nagoya-shi, Aichi-ken, 467-8530 (JP); Sato, Kei, c/o NGK Insulators Ltd, Nagoya-shi, Aichi-ken, 467-8530 (JP)
(74) Representative: Paget, Hugh Charles Edward

(57) **Abstract**

A display system includes a light guide plate for transmitting light therethrough, and a panel portion arranged opposite to a back of said light guide plate. The panel portion includes a driving portion provided with actuators of the number corresponding to that of a number of pixels. The panel portion causes a video image to be displayed on the light guide plate according to an inputted image signal, by introducing light into the light guide plate and controlling displacement operations in contact and separation directions of the actuators with respect to the light guide plate according to properties of the image signal, and thereby controlling leakage light in a predetermined region of the light guide plate. The display system further includes a cooling device for controlling flow of a fluid in contact with the back of the light guide plate, to cool the light guide plate from its backside.

## Description

### BACKGROUND OF THE INVENTION

### 1. Field of the Invention

The present invention relates to a display system and, more particularly, to an improved display system that includes a novel cooling device.

### 2. Description of Related Art

There has been proposed a unique display system that includes a light guide plate for transmitting light therethrough, and a driving portion arranged opposite to one plate surface of the light guide plate, wherein the driving portion is provided with actuators, the number of which corresponds to that of a number of pixels. The driving portion is operated so as to display video image on the light guide plate according to an inputted image signal, by introducing light into the light guide plate and controlling displacement operations of the actuators in contact and separation directions relative to the light guide plate according to properties of the image signal, and thereby controlling leakage light in a predetermined region of the light guide plate. Such a display system is disclosed in U.S. Patent No. 5,636,072 or U.S. Patent No. 5,862,275, for example, any may be referred to as "display system of the type specified" hereinafter.

The display system of the type specified differs from known liquid crystal display (LCD) or plasma display (PDP) in that it does not basically require a seal structure. Thus, it is possible to realize a display system having a divided panel structure that is highly suitable for upsizing and reduction in thickness of the panel without particular difficulties. Also, since the display system of the type specified belongs to direct viewing type, it is possible readily to achieve high contrast and satisfactory resistance to color fading even when irradiated by external light, beside that a more excellent viewing angle can be obtained even in comparison with cathode ray tube (CRT).

When the display system of the type specified is used to implement a practical large-size display, in order to eliminate unfavorable influence due to heat generation from the light source, it would be appropriate to cool the vicinity of the light source by cooling fan, etc., as disclosed in the applicants' co-pending U.S. Patent Application No.10/075,101 filed February 12, 2002. This is due to the desirability of mitigating limitations in flexibility of material selection from the viewpoint of heat resistance, for each portion of the display system, particularly the actuators in the light guide plate or the driving portion.

### SUMMARY OF THE INVENTION

It is an object of the present invention to provide a display system of the type specified, which includes a cooling device for properly cooling the display system, so as to positively mitigate requirements imposed on component materials of each portion of the display system in terms of heat resistance, and to achieve improved operating reliability of the display system even under severe use conditions to thereby effectively utilize the above-mentioned functional advantages of the display system.

The inventors conducted thorough research and investigations seeking for solution of the abovementioned object, and found that heat generation occurs in the display system of the type specified, even by displacement operations in contact and separation directions of the actuators relative to the light guide plate, that this type of heat generation becomes significant with the upsizing of the display system, and that it would be highly desirable to cool the light guide plate and the driving portion including the actuators as a whole, besides the above-mentioned cooling of the vicinity of the light source.

Based on such novel recognition, the present invention provides a display system comprising a light guide plate for transmitting light therethrough, and a panel portion arranged opposite to a back of said light guide plate, said panel portion comprising a driving portion provided with actuators of the number corresponding to that of a number of pixels, said panel portion causing a video image to be displayed on the light guide plate according to an inputted image signal, by introducing light into the light guide plate and controlling displacement operations in contact and separation directions of the actuators with respect to the light guide plate according to properties of the image signal, and thereby controlling leakage light in a predetermined region of the light guide plate, said display system further comprising a cooling device for controlling flow of a fluid in contact with the back of the light guide plate, to thereby cool said light guide plate from its backside.

With the display system according to the present invention, the cooling device serves to control the flow of fluid in contact with the back of the light guide plate and to cool the light guide plate from the back side. Therefore, even in the case of upsizing the display system of the type specified, all of the actuators and the light guide plate are effectively cooled despite heat generation due to displacement in contact and separation directions of the actuators with respect to the light guide plate. Therefore, requirements imposed on component materials such as the light guide plate or the actuators in the driving portion mainly from the viewpoint of heat resistance can be relaxed and operating reliability of the display system can be improved even under severe use conditions, while allowing effectively utilization of the above-mentioned advantageous functional characteristics. Also, by effectively cooling the actuators and the light guide plate as a whole, it is readily possible to maintain the display system at uniform temperature so as to avoid local fluctuations in the operating characteristics of the display system.

The cooling device may comprise a partition plate for forming a flow path of the fluid in contact with the back of the light guide plate at least in a region adjacent to the back of the light guide plate. The flow path may be formed as a circulation flow path. A blower means for controlling a flow speed of the fluid, such as a sirocco fan, may be arranged in the flow path. The flow path may be formed into a configuration having a cross-sectional area smaller than that of an upstream side in a downstream side in the region adjacent to the back of the light guide plate. In this instance, it is preferred that blower means for controlling a flow speed of the fluid is arranged on the downstream side of the flow path.

When the flow path of the fluid in contact with the back of the light guide plate is formed as a circulation flow path, it is preferred that a radiating portion comprising radiating fins or the like is provided in the partition plate at least in the downstream side of the flow path.

Also, when the partition plate for limiting the flow path of the fluid in contact with the back of the light guide plate has a contact surface with ambient air, a radiating portion comprising radiating fins or the like is preferably provided in the partition plate at least in the contact surface.

It is preferred that the partition plate is formed of a material with enriched thermal conductivity, such as aluminum or the like metal.

### BRIEF DESCRIPTION OF THE DRAWINGS

The present invention will now be described below in further detail with reference to illustrated embodiments shown in the accompanying drawings.

FIG. 1 is a front view of a display system of the type specified, to which the present invention can be suitably applied.

FIG. 2 is a partial sectional view taken along the line 2-2 in FIG.1.

FIG. 3 is an enlarged sectional view showing a main portion of the display system.

FIG. 4 is a sectional view showing a first embodiment of the cooling device according to the present invention.

FIG. 5 is a sectional view showing a second embodiment of the cooling device according to the present invention.

FIG. 6 is a sectional view showing a modification of the second embodiment.

FIG. 7 is a sectional view showing a third embodiment of the cooling device according to the present invention.

### DETAILED DESCRIPTION OF THE PREFERRED EMBODIMENT

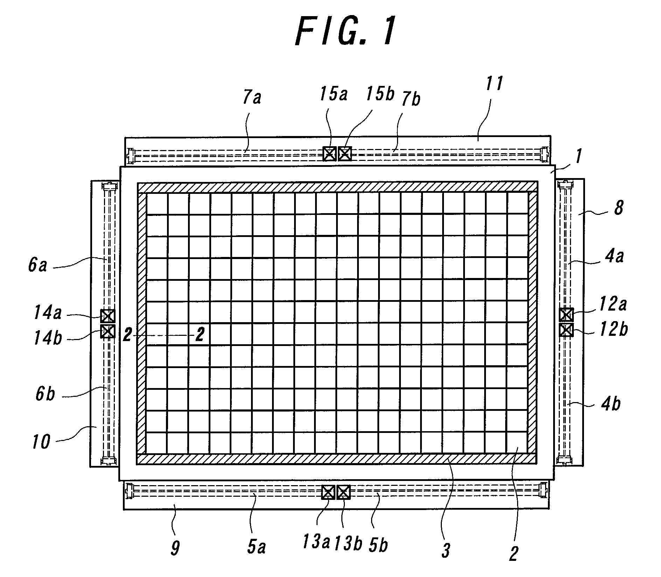

FIGS.1 to 3 show one example of the display system of the type specified, to which the present invention can be suitably applied. The display system comprises a light guide plate 1, through which light introduced from each side can be transmitted, a panel portion 2 formed of a plurality of panels arranged as a matrix, a frame 3 for preventing light leakage at the periphery of the panel portion 2 and also for achieving positioning of the panels during mounting, light sources 4a, 4b; 5a, 5b; 6a, 6b; 7a, 7b provided for respective sides of the light guide plate 1, reflectors 8, 9, 10, 11 having reflection surfaces which respectively surround the light sources 4a, 4b; 5a, 5b; 6a, 6b; 7a, 7b and the sides of the light guide plate for reflecting light from the corresponding light sources 4a, 4b; 5a, 5b; 6a, 6b; 7a, 7b, as well as cooling fans 12a, 12b; 13a, 13b; 14a, 14b; 15a, 15b secured to the respective sides of the reflectors 8, 9, 10, 11. Such a display system may be installed, for example, on a vertical wall of public facility.

The light to be introduced into the light guide plate 1 may be within any one of ultraviolet range, visible range and infrared range. The light guide plate 1 has such a light refractive index that light introduced into the inside of the light guide plate 1 totally reflects without penetrating the outside of the plate in the front and back sides, and requires that transmittance in the wavelength range of the light introduced is uniform and high. As long as requirement for such properties is satisfied, the material is not limited in particular. Thus, for example, the light guide plate 1 may comprise glass, quartz, acrylic resin, translucent plastics such as polycarbonate, translucent ceramics, or multi-layer structural body of materials that are different in refractive index, or other suitable material having an appropriate surface coating layer, etc.

The light guide plate 1 has a thickness that is approximately not less than one-hundredth but not more than one-tenth of the diagonal length of the rectangular light guide plate 1. By this, the light introduced into a side of the light guide plate 1 readily propagates straight toward an opposite side of the light guide plate 1.

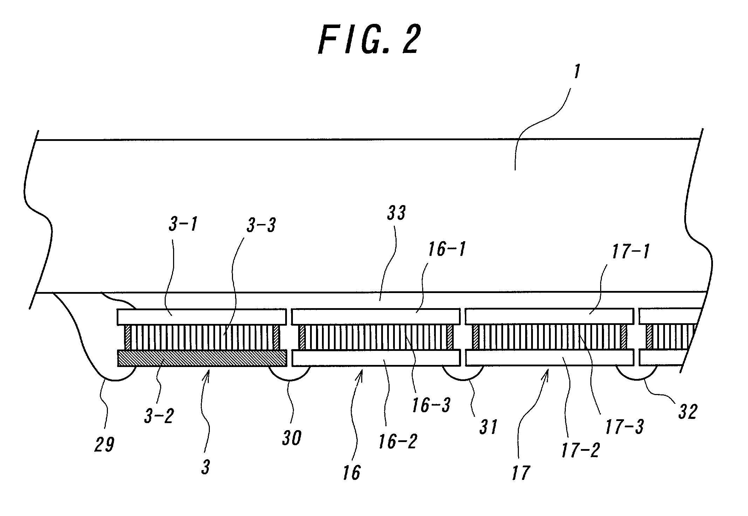

As shown in FIG.2 showing a section taken along line 2-2 in FIG.1, the panel portion 2 comprises panels 16, 17 each having a glass plate 16-1, 17-1 as a light guide plate, a printed board 16-2, 17-2 on which a driver IC is mounted opposite to the glass plate, and a display element 16-3, 17-3 with a predetermined number of pixels sandwiched between the glass plate 16-1, 17-1 and the printed board 16-2, 17-2.

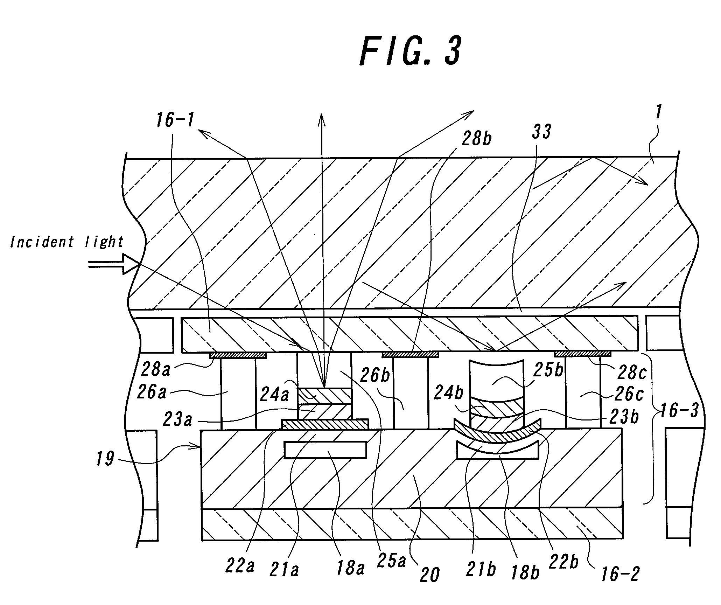

The details of the panel 16 will be described with reference to FIG.3, though that the following description applies to the panel 17, as well. The display element 16-3 of the panel 16 has a driving portion 19 that is arranged opposite to one surface of the glass plate 16-1, i.e., the light guide plate 1, and provided with actuators 18a, 18b of the number corresponding to a number of pixels. The driving portion 19 of the panel 16 can be operated so as to display video image on the light guide plate 1 corresponding to an image signal inputted to the display system, by controlling displacement operation in contact and separation directions of the actuators 18a, 18b relative to the glass plate 16-1 as part of the light guide plate 1 according to properties of the inputted image signal, and thereby controlling leakage light in a predetermined region of the light guide plate 1.

The actuators 18a, 18b each has a structure in which a substrate 20 made of ceramics, such as zirconia, is provided with a thin-wall portion 21a, 21b, and a piezoelectric / electrostrictive layer or anti-ferroelectric substance layer 22a, 22b having electrode films on its upper and lower surfaces, as well as a white scattering body layer 23a, 23b, a color light emission body layer 24a, 24b and a contact layer 25a, 25b are sequentially formed on the thin-wall portion 21a, 21b. The glass plate 16-1 is supported by the substrate 20 through plural posts 26a, 26b, 26c, and is arranged in close contact with the light guide plate 1, e.g., through silicon oil 33. Incidentally, reflectors or light absorption layers 28a, 28b, 28c are arranged between the posts 26a, 26b, 26c and the glass plate 16-1.

The actuator 18a shown on the left side of FIG.3 corresponds to the case of light emission of the display element 16-3, wherein the piezoelectric / electrostrictive layer or the anti-ferroelectric substance layer 22a and the thin-wall portion 21a protrude upward so that the contact layer 25a is in contact with the glass plate 16-1. Therefore, the light that has been introduced into the light guide plate 1 and totally reflected between an inner surface on the front side of the light guide plate 1 and an inner surface on the back side of the glass plate 16-1 in close contact with the light guide plate 1, is now transmitted to the surface of the color light emission body layer 24a through the contact layer 25a, and passed through the glass plate 16-1 to be emitted from the front side of the light guide plate 1 as scattered light of a color corresponding to that of the color light emission body layer 24a.

On the other hand, the actuator 18b shown on the right side of Fig.3 corresponds to the case of non-light emission of the display element 16-3, wherein the piezoelectric / electrostrictive layer or the anti-ferroelectric substance layer 22b and the thin-wall portion 21b are retracted downward and the contact layer 25b separates from the glass plate 16-1. Therefore, the light introduced into the light guide plate 1 and totally reflected between the inner surface of the light guide plate 1 and the inner surface of the glass plate 16-1 propagates toward the other side, without being emitted from the front side of the light guide plate 1.

Referring back to FIG.2, the frame 3 has a glass plate 3-1 and a black-coated glass plate 3-2 arranged opposite to the glass plate 3-1. An air layer 3-3 is formed between the glass plates 3-1 and the black-coated glass plate 3-2.

By mounting the frame 3 before mounting the panels 16, 17, it is possible to prevent light leakage of the periphery of the panel portion 2 and also to facilitate positioning of the panels 16, 17.

The light guide plate 1, the frame 3 and the panels 16, 17 are connected by gaskets 29, 30, 31, 32, respectively, and space surrounded by the light guide plate 1, the frame 3, the panels 16, 17 and the gaskets 29, 30, 31, 32 is filled with silicon oil 33 having a refractive index relatively close to that of the light guide plate 1 and the glass plates 3-1, 16-1, 17-1.

Since the above-mentioned basic structure and function of the display system of the type specified, to which the present invention is applied, is disclosed in U.S. Patent No. 5,636,072 or the applicants' co-pending U.S. Patent Application No.10/075,101, a more detailed description is omitted for the sake of simplicity. It is noted, however, that the disclosures of these patent documents are herein incorporated by reference.

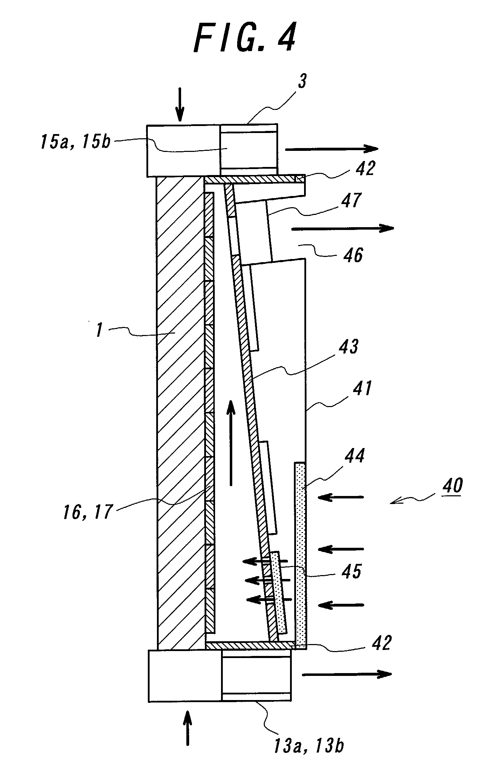

According to the present invention, the display system of the type specified having the above-mentioned structure further includes a cooling device for controlling flow of a fluid in contact with the back of the light guide plate 1, to cool the light guide plate 1 from its backside. A first embodiment of the cooling device denoted as a whole by reference numeral 40 will be described below with reference to Fig.4.

As described above, cooling fans are secured to the respective sides of the reflectors corresponding to the light sources of the specified display system. Among these cooling fans, only the cooling fans 13a, 13b; 15a, 15b on the upper and lower sides are shown in FIG.4. In the cooling device 40 according to the present embodiment, the back sides of the light guide plate 1 and the panels 16, 17 are completely covered by a rear cover 41. Thermal insulating materials 42 are applied to the inner surface portions of the rear cover 41 in its upper and lower regions adjacent to the light sources and the cooling fans13a, 13b; 15a, 15b. A partition plate 43 of generally flat shape is placed between the rear cover 41 and the back sides of the light guide plate 1 and the panels 16, 17. The partition plate 43 is inclined with respect to a vertical plane so that the distance between the light guide plate 1 and the panels 16, 17, on one hand, and the partition plate 43, on the other hand, is gradually decreased from the lower side toward the upper side. The partition plate 43 defines a cooling chamber on the back sides of the light guide plate 1 and the panels 16, 17, and is advantageously formed of material with a high thermal conductivity, for example, aluminum or the like metal material. An intake vent provided with a coarse filter 44 therein is arranged in the lower portion of the rear cover 41. A further intake vent provided with a fine filter 45 is arranged in the lower portion of the partition plate 43 at its region opposite to the coarse filter 44 of the rear cover 41. A recess portion 46 inwardly protruding toward the light guide plate 1 and the panels 16, 17 is provided in the upper portion of the rear cover 41. An exhaust vent and a blower 47 are provided in the upper portion of the partition plate 43 at a position corresponding to the recess portion 46. The blower 47 may be comprised of a sirocco fan, for example.

The blower 47 of the cooling device 40 is operated during the operation of the display system of the type specified, so as to introduce ambient air into the cooling chamber defined by the partition plate 43 through the filters 44, 45 while removing foreign matters in the ambient air, such as dust. The ambient air introduced into the cooling chamber flows from the lower side toward the upper side of the chamber, cooling the light guide plate 1 and the panels 16, 17 from the back sides, and is sucked from the exhaust vent in the upper portion of the partition plate 43 into the blower 47 and then exhausted from the recess portion 46 of the rear cover 41 to outside. As a result, the light guide plate 1 and the panels 16, 17 can be effectively cooled from the back sides during operation of the display system. Since the distance between the light guide plate 1 and the panels 16, 17, on one hand, and the partition plate 43, on the other hand, gradually decreases from the lower side toward the upper side of the cooling chamber, the speed of the air flow gradually increases from the lower side toward the upper side, to achieve substantially uniform cooling even when the temperature of the air flow increases gradually from the lower side toward the upper side of the chamber.

With the cooling device according to the embodiment shown in FIG. 4, even when the display system of the type specified is upsized and considerable heat is generated due to displacement operation in contact and separation directions of the actuators 18a, 18b relative to the light guide plate 1, the actuators 18a, 18b and the light guide plate 1 as a whole can be cooled from back sides effectively. Therefore, it is possible to mitigate requirements imposed on component materials of the display system of the type specified, such as materials for the light guide plate 1 or the actuators 18a, 18b in the driving portion mainly from the viewpoint of heat resistance, and provide improved operating reliability of the display system even under severe use conditions, while effectively utilizing advantageous functional characteristics unique to the display system of the type specified. Also, it is possible effectively to maintain the display system at a substantially uniform temperature, and avoid local fluctuation in the operating characteristics of the display system. Incidentally, the cooling capability of the cooling device 40 can be readily adjusted by properly adjusting the operating speed of the blower 47 and thereby controlling the speed of the air flow along the back sides of the light guide plate 1 and the panels 16, 17.

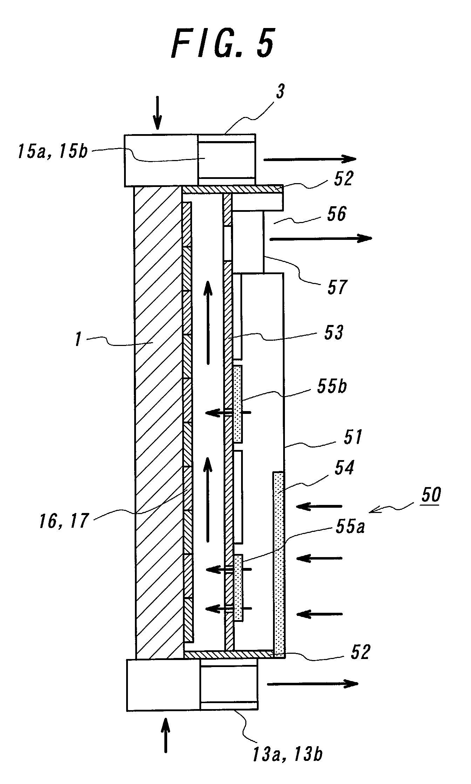

A second embodiment of the cooling device according to the present invention will be explained with reference to FIG.5.

In the cooling device according to the present embodiment, which as a whole is denoted by reference numeral 50, the back sides of the light guide plate 1 and the panels 16, 17 are completely covered by a rear cover 51. Thermal insulating materials 52 are applied to the inner surface portions of the rear cover 51 in its upper and lower regions adjacent to the light sources and cooling fans 13a, 13b; 15a, 15b. A partition plate 53 of generally flat shape is placed between the rear cover 51 and the back sides of the light guide plate 1 and the panels 16, 17. The partition plate 53 is arranged in parallel with a vertical plane so that the distance between the light guide plate 1 and the panels 16, 17, on one hand, and the partition plate 53, on the other hand, is kept constant as seen in the height direction. The partition plate 53 defines a cooling chamber on the back sides of the light guide plate 1 and the panels 16, 17, and is advantageously formed of metal material such as aluminum. An intake vent provided with a coarse filter 54 is arranged in the lower portion of the rear cover 51. Further intake vents provided with fine filters 55a, 55b are arranged in the lower portion and middle portion of the partition plate 53, respectively, at its regions opposite to the coarse filter 54 of the rear cover 51. A recess portion 56 inwardly protruding toward the light guide plate 1 and the panels 16, 17 is provided in the upper portion of the rear cover 51. An exhaust vent and a blower 57 are provided in the upper portion of the partition plate 53 at a position corresponding to the recess portion 56. The blower 57 may be comprised of a sirocco fan, for example.

The blower 57 of the cooling device 50 is operated during the operation of the display system of the type specified, so as to introduce ambient air into the cooling chamber defined by the partition plate 53 through the filters 54, 55a, 55b while removing foreign matters in the ambient air, such as dust. The ambient air introduced into the cooling chamber flows from the lower side toward the upper side of the chamber, cooling the light guide plate 1 and the panels 16, 17 from the back sides, and is sucked from the exhaust vent in the upper portion of the partition plate 53 into the blower 57, and then exhausted from the recess portion 56 of the rear cover 51 to outside. As a result, the light guide plate 1 and the panels 16, 17 can be effectively cooled from the back sides during operation of the display system. Incidentally, the ambient air introduced into the cooling chamber from the fine filter 55a in the lower portion of the partition plate 53 has a temperature that increases with cooling while flowing toward the upper portion. However, since the additional intake vent with the fine filter 55b is arranged in the middle portion of the partition plate 53 and fresh ambient air is supplied, it is possible to cool the back sides of the light guide plate 1 and the panels 16, 17 substantially uniformly.

In the points other than the above, the cooling device according to the second embodiment functions essentially in the same manner as the first embodiment.

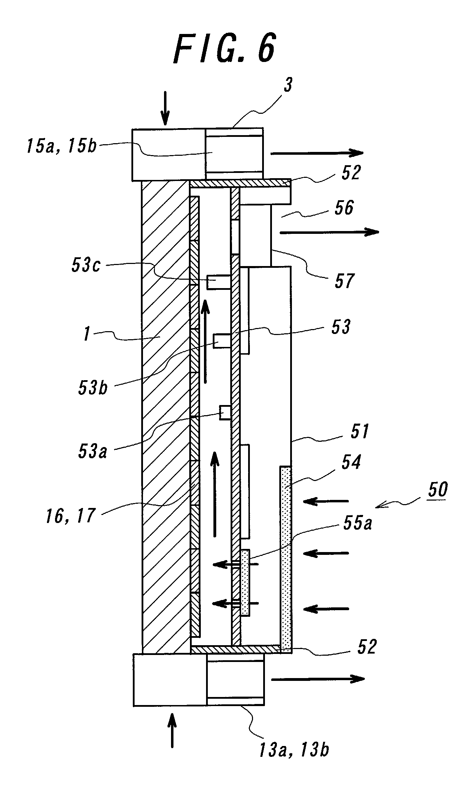

A modified example of the above-mentioned second embodiment will be explained with reference to FIG.6.

In the present example, the inner surface of the partition plate 53 in its region upper than the filter 55b in the cooling device 50 according to the second embodiment is provided with ridges 53a, 53b, 53c protruding toward the light guide plate 1 and the panels 16, 17 with gradually increasing protruding height. These ridges 53a, 53b, 53c function as baffles for agitating the air flow along the back sides of the light guide plate 1 and the panels 16, 17, to thereby promote the cooling action.

In the points other than the above, the cooling device according to the present example functions essentially in the same manner as the second embodiment.

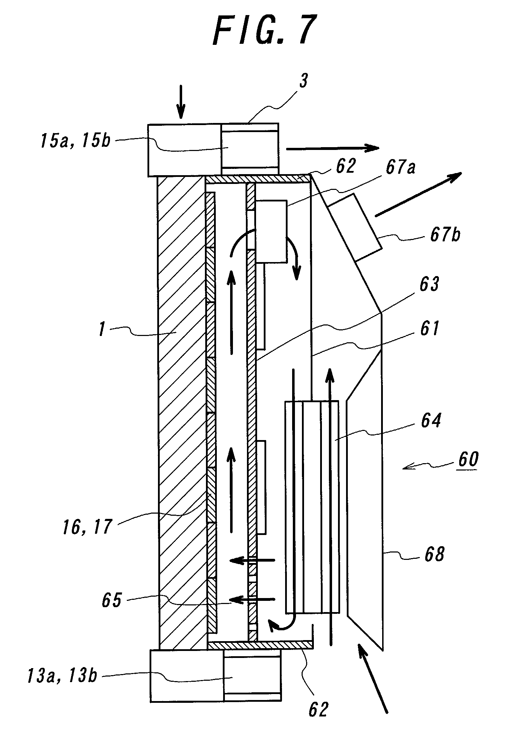

A third embodiment of the cooling device according to the present invention will be explained with reference to FIG. 7.

In the cooling device according to the present embodiment, which as a whole is denoted by reference numeral 60, the back sides of a light guide plate 1 and panels 16, 17 are completely covered by a rear cover 61. Thermal insulating materials 62 are applied to the inner surface portions of the rear cover 61 in its upper and lower regions adjacent to light sources and cooling fans 13a, 13b; 15a, 15b. A partition plate 63 of generally flat shape is placed between the rear cover 61 and the back sides of the light guide plate 1 and the panels 16, 17. The partition plate 63 is arranged in parallel with a vertical plane so that the distance between the light guide plate 1 and the panels 16, 17, on one hand, and the partition plate 63, on the other hand, is kept constant as seen in the height direction. The partition plate 63 defines a cooling chamber on the back sides of the light guide plate 1 and the panels 16, 17, and is advantageously formed of metal material such as aluminum. A heat exchanger 64 is arranged in the lower portion of the rear cover 61. An intake vent 65 is provided in the lower portion of the partition plate 63, at a region opposite to the heat exchanger 64. An exhaust vent and a blower 67a are arranged in the upper portion of the partition plate 63. The blower 67a may be comprised of a sirocco fan, for example. The heat exchanger 64 in the lower portion of the rear cover 61 is covered by a shroud 68. A second blower 67b is arranged in the upper portion of the shroud 68.

The blowers 67a, 67b of the cooling device 60 are operated during the operation of display system of the type specified, so that ambient air is sucked into the blower 67b through the inside of the heat exchanger 64 and the shroud 68, and exhausted to outside. At the same time, air flow is caused by the blower 67a to circulate along a closed path formed by the rear cover 61 and the partition plate 63, thereby effectively cooling the light guide plate 1 and the panels 16, 17 from the back sides. The circulating air flow is cooled to sufficiently low temperature by exchanging heat with the ambient air at the heat exchanger 64.

According to the present embodiment, by causing a fluid flow that is isolated from the ambient air and circulating the fluid flow along the back sides of the light guide plate 1 and the panels 16, 17, the driving portion having a precise structure can be definitely protected from dust or the like foreign matters included in the ambient air, without requiring regular maintenance operations, such as periodical replacement of the filters. Also, it is possible to use a liquid or gaseous heat transfer medium having proper temperature characteristics, as the fluid for cooling the light guide plate 1 and the panels 16, 17 from the back sides.

In the points other than the above, the cooling device according to the present example functions essentially in the same manner as the previous embodiments.

It will be appreciated from the foregoing description that the present invention provides an improved display system of the type specified, which includes a cooling device for properly cooling the display system, so as to positively mitigate requirements imposed on component materials of each portion of the display system in terms of heat resistance, and to achieve improved operating reliability of the display system even under severe use conditions to thereby effectively utilize the above-mentioned functional advantages of the display system.

While the present invention has been described above with reference to some preferred embodiments, they were presented by way of examples only, and various changes or modifications may be made without departing from the scope of the invention.

Thus, for example, in the embodiments of FIGS.4 to 6, there may be provided radiating fins as a radiating portion in the contact surface side with ambient air, at a region adjacent to the blowers 47, 57 in the upper portion of the partition plates 43, 53. Similarly, in the embodiment of FIG.7, there may be provided radiating fins as a radiating portion in the contact surface side with ambient air, at a region opposite to the blower 67a, 67b in the upper portion of the rear cover 61.

## Claims

1. A display system comprising a light guide plate for transmitting light therethrough, and a panel portion arranged opposite to a back of said light guide plate, said panel portion comprising a driving portion provided with actuators of the number corresponding to that of a number of pixels, said panel portion causing a video image to be displayed on the light guide plate according to an inputted image signal, by introducing light into the light guide plate and controlling displacement operations in contact and separation directions of the actuators with respect to the light guide plate according to properties of the image signal, and thereby controlling leakage light in a predetermined region of the light guide plate, said display system further comprising a cooling device for controlling flow of a fluid in contact with the back of the light guide plate, to thereby cool said light guide plate from its backside.

2. A display system according to Claim 1, wherein said cooling device comprises a partition plate for defining a flow path of the fluid in at least a region adjacent to the back of the light guide plate.

3. A display system according to Claim 2, wherein the flow path comprises blower means for controlling flow speed of the fluid.

4. A display system according to Claim 2 or 3, wherein flow path comprises a circulation flow path.

5. A display system according to Claim 2 or 3, wherein the flow path has a cross-sectional area at a downstream side in the region adjacent to the back of the light guide plate, said cross-sectional area being smaller than that at an upstream side.

6. A display system according to Claim 5, wherein the flow path comprises blower means for controlling a flow speed of the fluid in the downstream side.

7. A display system according to Claim 5, wherein the partition plate has a radiating portion at least in the downstream side of the flow path.

8. A display system according to Claim 7, wherein the radiating portion comprises radiating fins.

9. A display system according to Claim 4, wherein said circulation flow path is formed by a partition wall having a contact surface with ambient air.

10. A display system according to Claim 9, wherein the partition wall has a radiating portion at least in the contact surface with ambient air.

11. A display system according to Claim 10, wherein the radiating portion comprises radiating fins.

12. A display system according to Claim 7 or 10, wherein the partition plate is made of a material with enriched thermal conductivity.
